(19) Europäisches Patentamt / European Patent Office / Office européen des brevets

(11) **EP 1 733 223 B1**

(12) **EUROPÄISCHE PATENTSCHRIFT**

(45) Veröffentlichungstag und Bekanntmachung des Hinweises auf die Patenterteilung:
**16.01.2008 Patentblatt 2008/03**

(21) Anmeldenummer: **05737888.7**

(22) Anmeldetag: **05.04.2005**

(51) Int Cl.:
**G01N 29/04** *(2006.01)* **G01N 29/14** *(2006.01)*
**G07C 3/14** *(2006.01)* **G05B 17/00** *(2006.01)*
**G01M 7/08** *(2006.01)* **G01N 29/44** *(2006.01)*

(86) Internationale Anmeldenummer:
**PCT/EP2005/003573**

(87) Internationale Veröffentlichungsnummer:
**WO 2005/111598 (24.11.2005 Gazette 2005/47)**

(54) **VORRICHTUNG UND VERFAHREN ZUR BEURTEILUNG EINER GÜTEKLASSE EINES ZU PRÜFENDEN OBJEKTS**

DEVICE AND METHOD FOR ASSESSING THE QUALITY CLASS OF AN OBJECT TO BE TESTED

DISPOSITIF ET PROCEDE POUR EVALUER LA CLASSE DE QUALITE D'UN OBJET A TESTER

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **13.05.2004 DE 102004023824**

(43) Veröffentlichungstag der Anmeldung:
**20.12.2006 Patentblatt 2006/51**

(73) Patentinhaber: **Fraunhofer-Gesellschaft zur Förderung der angewandten Forschung e.V.
80686 München (DE)**

(72) Erfinder:
- **HENTSCHEL, Dieter
  01109 Dresden (DE)**
- **TSCHÖPE, Constanze
  01277 Dresden (DE)**
- **HOFFMANN, Rüdiger
  01237 Dresden (DE)**
- **EICHNER, Matthias
  01069 Dresden (DE)**
- **WOLFF, Matthias
  02826 Görlitz (DE)**

(74) Vertreter: **Schoppe, Fritz et al
Schoppe, Zimmermann, Stöckeler & Zinkler
Patentanwälte
Postfach 246
82043 Pullach bei München (DE)**

(56) Entgegenhaltungen:
**US-A- 5 465 321 US-B1- 6 477 485**

- **WHITNEY D A ET AL: "Multi-scale signal feature processing for automatic, objective vehicle noise and vibration quality analysis" ACOUSTICS, SPEECH, AND SIGNAL PROCESSING, 1995. ICASSP-95., 1995 INTERNATIONAL CONFERENCE ON DETROIT, MI, USA 9-12 MAY 1995, NEW YORK, NY, USA,IEEE, US, Bd. 5, 9. Mai 1995 (1995-05-09), Seiten 2959-2962, XP010151965 ISBN: 0-7803-2431-5**
- **WOLFERTSTETTER F ET AL: "Structured Markov models for speech recognition" ACOUSTICS, SPEECH, AND SIGNAL PROCESSING, 1995. ICASSP-95., 1995 INTERNATIONAL CONFERENCE ON DETROIT, MI, USA 9-12 MAY 1995, NEW YORK, NY, USA,IEEE, US, Bd. 1, 9. Mai 1995 (1995-05-09), Seiten 544-547, XP010625290 ISBN: 0-7803-2431-5**
- **TSCHOPE C ET AL: "Classification of non-speech acoustic signals using structure models" ACOUSTICS, SPEECH, AND SIGNAL PROCESSING, 2004. PROCEEDINGS. (ICASSP '04). IEEE INTERNATIONAL CONFERENCE ON MONTREAL, QUEBEC, CANADA 17-21 MAY 2004, PISCATAWAY, NJ, USA,IEEE, Bd. 5, 17. Mai 2004 (2004-05-17), Seiten 653-656, XP010719013 ISBN: 0-7803-8484-9**
- **LAU H Y K: "A hidden Markov model-based assembly contact recognition system" MECHATRONICS, PERGAMON PRESS, OXFORD, GB, Bd. 13, Nr. 8-9, Oktober 2003 (2003-10), Seiten 1001-1023, XP004432028 ISSN: 0957-4158**

EP 1 733 223 B1

## Beschreibung

Die vorliegende Erfindung betrifft das technische Gebiet der zerstörungsfreien Prüfung und insbesondere betrifft die vorliegende Erfindung ein Verfahren und eine Vorrichtung zur Klassifikation eines zu prüfenden Objekts in eine Güteklasse unter Verwendung von akustischen Signalen.

Um einen Verschleiß oder eine Restlebensdauer eines Objekts, wie beispielsweise Eisenbahnräder, bestimmen zu können, werden oftmals Verfahren eingesetzt, die das zu testende Objekt nicht zerstören, damit dieses Objekt weiterhin verwendungsgemäß eingesetzt werden kann. Um ein solches zerstörungsfreies Prüfen zu ermöglichen, werden insbesondere akustische Signale, zu einer solchen Verschleiß- oder Restlebensdauerprüfung eingesetzt, da diese besonders gute Ausbreitungseigenschaften in Festkörpern aufweisen. Ein zu prüfendes Objekt wird dann mit einem akustischen Anregungssignal beaufschlagt und über Sensoren eine empfangene Impulsantwort auf das Anregungssignal digital abgespeichert. Von diesem empfangenen Signal, das heißt, der Impulsantwort auf das Anregungssignal, erfolgt dann in mehreren Zeitfenstern eine Berechnung einer Kurzzeit-FFT, welche eine Betrachtung des Signals im Frequenzbereich ermöglicht. Das Ergebnis wird in Form einer spektralen Repräsentation (Spektrogramm) dargestellt. In diesem ist eine Signalenergie des empfangenen Impulsantwortsignals in Abhängigkeit von einer Zeit und einer Frequenz aufgetragen. Dadurch ist eine umfassende Charakterisierung der relevanten Schwingungsmodi und ihres Dämpfungsverlaufs möglich.

Voraussetzung für eine Bewertung der zu prüfenden Bauteile oder Objekte ist meist die Durchführung eines Anlernprozesses in einem vorausgehenden Schritt. Dabei wird eine repräsentative Auswahl von Gutteilen zur Bildung eines Referenzmusters verwendet.

Der Abstand zum Referenzmuster wird bestimmt. Anhand dessen wird entschieden, ob es sich um ein fehlerfreies oder defektes Bauteil handelt.

Durch eine Einführung eines Mehrklassenmodells konnte bewirkt werden, dass die durch diese Veränderung entstandenen Klassen manuell als weitere Gutklassen definiert werden konnten. Bei auftretenden Abweichungen von der Anlernklasse wurde das Teil oder Objekt nicht mehr als schlecht definiert, statt dessen erfolgte die Bildung einer neuen Klasse, die zunächst als undefinierte Klasse galt und erst durch manuelle Prüfung das Prädikat "gut" bzw. "schlecht" erhielt.

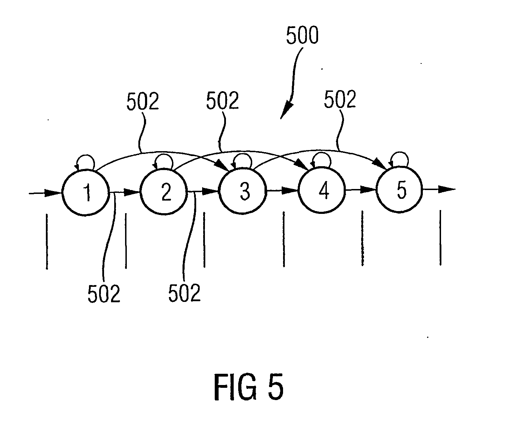

Zu einer solchen Klassifikation der Bauteile oder Objekte konnte bereits erfolgreich der Ansatz verwendet werden, strukturierte, nicht-sprachliche Signale mit Methoden der Sprachverarbeitung zu klassifizieren. In einigen Fällen kann dazu ein einfacher DTW-Erkenner (DTW = Dynamic Time Warping) verwendet werden, wie dies beispielsweise in P. Holstein, M. Koch, D. Hirschfeld, R. Hoffmann, D. Bader, K. Augsburg: "A Strategy for Signal Recognition under Adverse Conditions" in: Proc. 32nd Conf. Internoise, 2003, Jeju, Korea, vorgeschlagen wurde. In komplizierten Fällen wird das Konzept der Hidden-Markov-Modelle (HMM = hidden Markov Modell) angewendet, wie es exemplarisch in Fig. 5 dargestellt ist. Die Anwendung eines solchen HMM-Konzepts wurde beispielsweise in den folgenden Schriften vorgeschlagen:

D. Zhang Y. Zeng, X. Zhou, Cheng Y: "The pattern recognition of non-destructive testing based on HMM", in: Proc. 4th World Congress on Intelligent Control and Automation (Cat. No. 02EX527), 2002, vol. 3, pp. 2198-2202, Piscataway, NJ, USA;

P. Baruah und R.B. Chinnma: "HMMs for diagnostics and prognostics in machining processes," in: Proc. 57th Meeting of the Society for Machinery Failure Prevention Technology, 2003, pp. 389-398, Virginia Beach, USA;

A.R. Taylor und S. R. Duncan: "A comparison of techniques for monitoring process faults," in: Proc. Conf. Control Systems, 2002, pp. 323-327, Stockholm, SE;

H.Y.K. Lau: "A hidden markov model-based assembly contact recognition system," Mechatronics, vol. 13(8-9), pp. 1001-1023, 2003, ISSN 0957-4158.

Aufgrund der wohl definierten sequentiellen Struktur eines Sprachsignals verwenden Hidden-Markov-Modelle normalerweise einfache Links-Rechts-Graphen, wie den Graphen 500 in Fig. 5. Diese Graphen bestehen aus einer Menge miteinander verbundener, sog. versteckter (hidden) Knoten 1, ..., 5 (auch Zustände genannt), und einer Funktion, die den Zuständen Merkmalvektoren zuordnet. Der Knoten 1 stellt den Eingangsknoten des Hidden-Markov-Modells und der Knoten 5 den Ausgangsknoten des Hidden-Markov-Modells dar. Die einzelnen Knoten 1 bis 5 sind dabei durch die Verbindungen 502 miteinander verbunden, die eine Übergangswahrscheinlichkeit von einem Knoten in einen nachfolgenden Knoten wiedergeben. Die Funktion, die den Zuständen Merkmal-Vektoren zuordnet, ist zumeist eine Mischung aus Gauß-Verteilungsdichtefunktionen im Merkmalraum für jeden inneren Zustand des HMMs.

Die Grenzen der vorstehend beschriebenen herkömmlichen Verfahren liegen meist darin, dass solche Verfahren auf kleine Produktionsveränderungen, die sich nicht auf die Qualität des Bauteils auswirken, mit dem Aussortieren von fehlerfreien Teilen reagieren. Die Verwendung von Mehrklassenmodellen ist bei der Lösung dieses Problems zwar ein erster Schritt, allerdings werden auf diese Weise verhältnismäßig viele Klassen erzeugt, die jedes Mal vom Anwender die Entscheidung erfordern, ob es sich bei der neu aufgetretenen Klasse um eine gute oder um eine schlechte Klasse handelt. Die Verwendung von HMMs erzielt bereits gute Erfolge bei einfach strukturierten Signalen. Da jedoch Signale, die bei komplizierteren Problemen der zerstörungsfreien Prüfung auftreten, im Allgemeinen keine einfachen Strukturen besitzen wie die vorstehend beschriebene Links-Rechts-Struktur, können solche einfachen Links-Rechts-Strukturen keine oder nur eine sehr ungenaue Bestimmung einer Güteklasse des zu überprüfenden Bauteils bieten.

Ferner wird in dem Konferenzbeitrag

F. Wolfertstetter und G. Ruske: "Structured Markov models for speech recognition", in: Proc. ICASSP, 1995, pp. 544-547, Detroit, USA

ein Ansatz vorgeschlagen, erweitere Strukturmodelle für eine Sprachverarbeitung einzusetzen. Diese erweiterten Strukturmodelle in Form von stochastischen Markov-Graphen ermöglichen eine verbesserte Synthese und Erkennung von Sprache. Als nachteilhaft erweist sich dieser Ansatz allerdings dadurch, dass Sprachsignale gegenüber den vorstehend erwähnten akustischen Prüfsignalen von völlig verschiedenen Prozessen erzeugt werden und damit auch andere Eigenschaften aufweisen. Eine einfache Übernahme der besonderen Strukturmodelle in Form der stochastischen Markov-Graphen für eine zerstörungsfreie Prüfung kann daher nicht ohne weiteres erfolgen.

Ebenso wird in einem Konferenzbeitrag

M. Eichner, M. Wolff und R. Hoffmann: "A unified approach for speech synthesis and speech recognition using stochastic Markov graphs," in Proc. 6th Int. Conf. Spoken Language Processing (ICSLP), 2000, vol. 1, pp. 701-704, Beijing, PR China,

und in dem Konferenzbeitrag

M. Eichner, S. Ohnewald, M. Wolff and R. Hoffmann: "Speech synthesis using Stochastic Markov Graphs," in: Proc. ICASSP, May 5 - 7, 2001, Salt Lake City, UT, USA,

eine Möglichkeit zur Spracherkennung bzw. Sprachsynthese auf der Basis von komplexen Strukturmodellen in der Form von stochastischen Markov-Graphen vorgeschlagen. Hier gelten ebenso wiederum die zuvor genannten Nachteile bzw. Probleme bei der Übertragung der komplexen Strukturmodelle aus der Sprachverarbeitung auf ein zerstörungsfreies Prüfverfahren.

Das Dokument "Multi-scale signal feature processing for automatic objective vehicle noise and vibration quality analysis", veröffentlicht von Whitney, D. A. et al. in Acoustics, Speech, And Signal Processing, 1995, ICASSP-95, 1995 International Conference on, Detroit, MI, USA 9-12 May 1995, New York, NY, USA, IEEE, US, Bd. 5. 9. Mai 1995 (1995-05-09), Seiten 2959-2962, XP010151965 ISBN: 0-7803-2431-5, zeigt eine neue Signalverarbeitungstechnik zum Verständnis der Dynamik von zeitveränderlichen Signalen in Fahrzeugen, der sogenannten Hyperstate-Analyse. Fahrzeuglärm und Vibrationen sind Beispiele für zufällig-variierende Transienten oder nichtstationäre Signale, die nicht effektiv mit klassischen Spektralanalysetechniken analysiert werden können. Durch die Verwendung von geschachtelten Hidden-Markov-Modellen identifiziert die Hyperstate-Analyse Transienten und nichtstationäres Verhalten deutlich besser. Sie verwendet einen wahrscheinlichkeitsbasierten Rahmen, welcher eine automatisierte objektive Klassifizierung von verrauschten Signalen erlaubt. Die Technik wird bei Motorstartsequenzen von verschiedenen Typen von Fahrzeugen angewandt.

Die US 6,477,485 B1 zeigt ein Verfahren zum Überwachen eines Systemverhaltens, das empirische Verteilungen und kumulative Verteilungsnormen verwendet. Hierbei liefern Sensoren eines Systems, wie beispielsweise eines Aufzugsystems, Werte von entsprechenden Parametern, die verwendet werden, um eine empirische Verteilung eines Prozesses zu bilden. Dieser Prozess kann dabei durch Zuhilfenahme eines fünfdimensionalen Markov-Kettenmodells erfolgen. Hieran anschließend werden bei normaler Funktion diese Sensoren periodisch und als Antwort auf bestimmte Ereignisse ausgelesen und eine Abnormalität durch Vergleich der aktuellen Information gegen die empirische Verteilung des Prozesses bestimmt. Abweichungen vom normalen Verhalten liefern ein quantitatives Maß für eine Systemfehlfunktion oder die Abnormalität. Eine Elimination von Daten von einem oder mehreren Sensoren in jeder Iteration der Verarbeitung identifiziert einen oder mehrere Sensoren, die mit der Abnormalität im Zusammenhang stehen. Die Verwendung einer kumulativen Verteilungsnorm einer Abweichung vom normalen Verhalten ermöglicht einen Vergleich einer relativen Funktionsfähigkeit eines Systems mit einer relativen Funktionsfähigkeit eines anderen Systems, das gleich oder auch verschieden ist.

Die US 5,465,321 A zeigt ein Systemfehlerbeobachtungsverfahren und eine entsprechende Vorrichtung, welche fähig ist, die Abbildung von Symptomen auf Fehler direkt von Trainingsdaten zu lernen. Hierbei wird zuerst ein Zustand von dem System zu diskreten Zeitintervallen geschätzt. Ein Merkmalsvektor der Dimension k wird von Sätzen von aufeinanderfolgenden Fenstern von Sensordaten geschätzt. Eine Mustererkennungskomponente moduliert dann die augenblickliche Schätzung der vorab Klassenwahrscheinlichkeit, welche den Merkmalen gegeben wurden. Schließlich wird ein Hidden-Markov-Modell verwendet, um einen Vorteil aus dem zeitlichen Zusammenhang zu ziehen, um Klassenwahrscheinlichkeiten konditioniert auf die näher zurückliegende Vergangenheit zu schätzen. In diesem hierarchischen Muster eines Informationsflusses werden die Zeitreihendaten transformiert und in Kategorien abgebildet (die Fehlerklassen) und über die Zeit integriert, um eine robuste Entscheidungsfindung zu ermöglichen.

Der vorliegenden Erfindung liegt daher die Aufgabe zugrunde, eine exaktere und weniger störanfälligere Möglichkeit zu schaffen, eine Klassifikation eines zu prüfenden Bauteils in eine Güteklasse vorzunehmen.

Diese Aufgabe wird durch eine Vorrichtung zum Beurteilen einer Güteklasse eines zu prüfenden Objekts gemäß Anspruch 1 und ein Verfahren zum Beurteilen einer Güteklasse eines zu prüfenden Objekts gemäß Anspruch 13 gelöst.

Die vorliegende Erfindung schafft eine Vorrichtung zum Beurteilen einer Güteklasse eines zu prüfenden Objekts mit folgenden Merkmalen:

einer Einrichtung zum Erfassen eines akustischen, nicht-sprachlichen Prüfsignals von dem zu prüfenden Objekt;

einer Einrichtung zum Bereitstellen eines stochastischen Markov-Modells, das auf der Grundlage von Referenzmessungen von Objekten bekannter Güteklassen Zustände und Übergänge zwischen Zuständen umfasst, wobei in dem stochastischen Markov-Modell jedem Zustand eine einzige Wahrscheinlichtkeitsdichteverteilung zugeordnet ist und wobei mehrere Zustände Übergänge von einem gemeinsamen Vorganger-Zustand besitzen;

einer Einrichtung zum Bewerten des Prüfsignals unter Verwendung des stochastischen Markov-Modells; und

einer Einrichtung zum Einordnen des zu prüfenden Objekts in eine Güteklasse, basierend auf der Bewertung des Prüfsignals.

Ferner schafft die vorliegende Erfindung ein Verfahren zum Beurteilen einer Güteklasse eines zu prüfenden Objekts mit folgenden Schritten:

Erfassen eines akustischen, nicht-sprachlichen Prüfsignals von dem zu prüfenden Objekt;

Bereitstellen eines stochastischen Markov-Modells, das auf der Grundlage von Referenzmessungen von Objekten bekannter Güteklassen Zustände und Übergänge zwischen Zuständen umfasst, wobei in dem stochastischen Markov-Modell jedem Zustand eine einzige Wahrscheinlichtkeitsdichteverteilung zugeordnet ist und wobei mehrere Zustände Übergänge von einem gemeinsamen Vorganger-Zustand besitzen;

Bewerten des Prüfsignals unter Verwendung des stochastischen Markov-Modells; und

Einordnen des zu prüfenden Objekts in eine Güteklasse, basierend auf der Bewertung des Prüfsignals.

Der vorliegenden Erfindung liegt die Erkenntnis zugrunde, dass sich komplexe Strukturmodelle wie das stochastische Markov-Modell auch für zerstörungsfreie Prüfverfahren verwenden lassen, wobei dann diese stochastischen Markov-Modelle Zustände und Übergänge zwischen Zuständen umfassen müssen, die auf der Grundlage von Referenzmessungen von Objekten bekannter Güteklassen ausgebildet sind. Im Unterschied zur Sprachverarbeitung bzw. Spracherkennung ist es bei der Anwendung der stochastischen Markov-Modelle daher nötig, die Netz-Struktur des stochastischen Markov-Modells, das heißt, die Übergänge zwischen einzelnen Zuständen sowie die Anzahl und Lage der Zustände im stochastischen Markov-Modell vor der eigentlichen Beurteilung einer Güteklasse eines zu prüfenden Objekts zunächst unter Zuhilfenahme von Referenzmessungen von Objekten bekannter Güteklassen entsprechend auszubilden. Bei der Sprachverarbeitung ist ein solches Ausbilden der Übergänge zwischen einzelnen Zuständen und der Lage der einzelnen Zustände im stochastischen Markov-Modell oftmals nicht notwendig und kann nach der Ausbildung des stochastischen Markov-Modells auf der Basis von allgemeinen psychoakustischen Zusammenhängen dann während der Klassifikation von Sprachabschnitten zu einer Anpassung der Genauigkeit verwendet werden. Der Kerngedanke der vorliegenden Erfindung besteht somit darin, dass sich auch bei der zerstörungsfreien Prüfung von Objekten akustische Signale einsetzen lassen, und durch Verfahren wie die aus der Sprachverarbeitung bekannten stochastischen Markov-Modelle klassifizieren lassen, wobei dann jedoch auf eine geeignete Ausbildung der Zustände und Übergänge zwischen den Zuständen zu achten ist.

Die vorliegende Erfindung bietet den Vorteil, dass der vorgeschlagene Ansatz universell einsetzbar und vollständig datengesteuert ist und nur wenig Kenntnisse über die zugrundeliegenden Prozesse der Strukturierung des Prüfsignal in dem zu prüfenden Objekt notwendig ist. Im Vergleich zu den bisher verwendeten Methoden, insbesondere der Verwendung von HMM-Strukturen, bei der zerstörungsfreien Prüfung werden eindeutig bessere, d.h. exaktere Ergebnisse erzielt, die zudem weniger störanfällig gegen eine Fehlklassifikation sind. So kann bei Verwendung des stochastischen Markov-Modells gegenüber der Verwendung von HMM-Strukturen eine deutliche Verbesserung der Trennschärfe zwischen den Güteklassen erzielt werden. Damit können beispielsweise "gute" von "schlechten" Bauteilen zu nahezu 100 Prozent unterschieden werden. Bei der Ermittlung einer Lebensdauer des zu prüfenden Objekts unter Verwendung der stochastischen Markov-Modelle kann ein Alterungszustand des zu prüfenden Objekts zu annähernd 98 % richtig erkannt werden. Es ist somit ein wesentlicher Vorteil der vorliegenden Erfindung, dass die aus der Sprachverarbeitung bzw. Spracherkennung bekannten Strukturmodelle der stochastischen Markov-Modelle nach einer Anpassung auch für nicht sprachliche Anwendungen wie die zerstörungsfreie Prüfung eingesetzt werden können und somit die Vorteile der Verwendung von stochastischen Markov-Modellen in Form einer exakteren Klassifikationsmöglichkeit auch für die nicht-sprachlichen Anwendungen nutzbar sind.

Der Kern der Erfindung liegt somit in der Anwendung von stochastischen Markov-Modellen oder -graphen zur Klassifizierung nicht-sprachlicher akustischer Signale. Es erfolgt eine automatische "Strukturaufdeckung" der Signale und eine Modellierung als stochastische Markov-Graphen oder -modellen.

Bevorzugte Ausführungsbeispiele der vorliegenden Erfindung werden nachfolgend anhand der beiliegenden Zeichnungen näher erläutert. Es zeigen:

Fig. 1    ein Blockschaltbild eines Ausführungsbeispiels der vorliegenden Erfindung;

Fig. 2    ein Blockschaltbild eines ersten Ausführungsbeispiels des erfindungsgemäßen Verfahrens;

Fig. 3    eine schematische Darstellung einer Netzstruktur eines HMM-Graphen und eines SMM-Graphen, zur Verdeutlichung der Unterschiede zwischen HMM-Graphen und SMM-Graphen;

Fig. 4    ein zweites Ausführungsbeispiel des erfindungsgemäßen Verfahrens; und

Fig. 5    eine Darstellung einer Netztopologie eines HMM-Graphen, wie er in herkömmlichen Ansätzen verwendet wird.

In der nachfolgenden Beschreibung der Ausführungsbeispiele der vorliegenden Erfindung werden für die in den verschiedenen Zeichnungen dargestellten und ähnlich wirkenden Elemente gleiche oder ähnliche Bezugszeichen verwendet, wobei auf eine wiederholte Beschreibung dieser Elemente verzichtet wird.

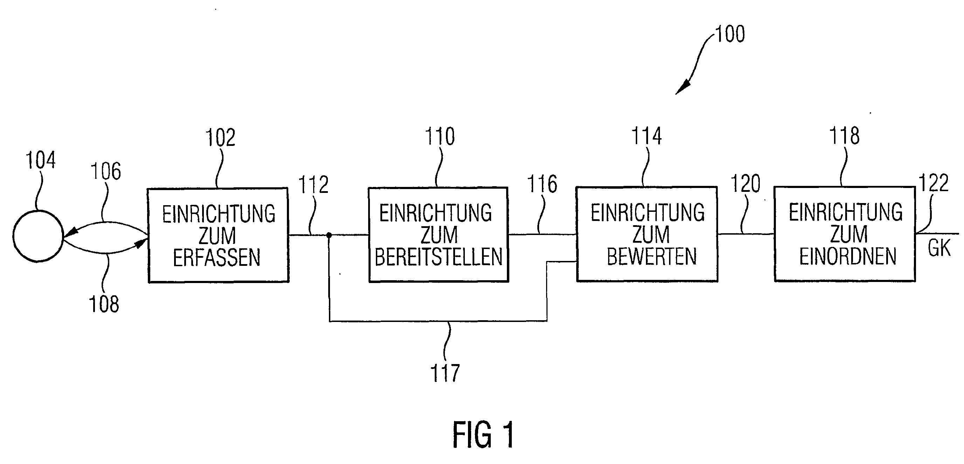

Fig. 1 zeigt ein Blockschaltbild eines Ausführungsbeispiels der vorliegenden Erfindung. Hierbei umfasst die Vorrichtung 100 zur Beurteilung einer Güteklasse eines zu prüfenden Objekts eine Einrichtung 102 zum Erfassen eines (beispielsweise akustischen) Prüfsignals 108 von dem zu prüfenden Objekt 104 oder zum Beaufschlagen des zu prüfenden Objekts 104 mit einem akustischen Anregungssignal 106, um darauf basierend ein Prüfsignal 108 zu erfassen. Ferner umfasst die Vorrichtung 100 zum Beurteilen eine Einrichtung 110 zum Bereitstellen eines stochastischen Markov-Modells. Die Einrichtung 110 zum Bereitstellen ist über eine Verbindung 112 mit der Einrichtung 102 zum Erfassen verbunden. Ferner umfasst die Vorrichtung 100 zum Beurteilen eine Einrichtung 114 zum Bewerten des Prüfsignals unter Verwendung des stochastischen Markov-Modells, wobei die Einrichtung 114 zum Bewerten über eine zweite Verbindung 116 mit der Einrichtung 110 zum Bereitstellen und über eine weitere Verbindung 117 mit der Einrichtung 102 zum Beaufschlagen verbunden ist. Außerdem umfasst die Vorrichtung 100 zur Beurteilung eine Einrichtung 118 zum Einordnen des zu prüfenden Objekts 104 in eine Güteklasse GK, basierend auf der Bewertung des Prüfsignals 108. Die Einrichtung 118 zum Einordnen ist ferner über eine dritte Verbindung 120 mit der Einrichtung 114 zum Bewerten verbunden und weist ferner einen Ausgang 122 auf, an dem ein Signal abgreifbar ist, das einen Rückschluss auf die Güteklasse GK bietet, in die die Einrichtung 118 zum Einordnen das zu prüfende Objekt 104 eingeordnet hat.

Um ein zu prüfendes Objekt 104 auf bestimmte Parameter, wie beispielsweise eine Herstellungsqualität, einen Verschleiß oder einen Betriebszustand zu überprüfen, kann die Einrichtung 102 zum Erfassen dem zu prüfenden Objekt 104 ein akustisches Anregungssignal 106 zuführen, wobei das akustische Anregungssignal 106 beispielsweise ein Ultraschallimpuls oder ähnlich ist, das über eine feste (oder flüssige bzw. gasförmige) Verbindung dem zu prüfenden Objekt 104 beaufschlagt wird (aktives Erfassen). Ansprechend auf das akustische Anregungssignal 106 kann sich in dem zu prüfenden Objekt 104 entsprechend einer zu prüfenden charakteristischen Struktur in dem Objekt 104, die beispielsweise einem Materialabtrag bei einer Verschleiß-Untersuchung entspricht, ein charakteristisches akustisches Muster ausbilden, das als Prüfsignal 108 zu erfassen ist.

Alternativ kann das Prüfsignal 108 auch durch ein passives Erfassen ermittelt werden, wobei dann ein Beaufschlagen des zu prüfenden Objektes 104 mit dem Anregungssignal 106 entfallen kann, wobei sich ein von dem zu prüfenden Objekt ausgehendes Signal nutzen lässt.

Dieses Prüfsignal 108 kann dann beispielsweise wieder unter Verwendung einer festen, flüssigen oder gasförmigen (z.B. Luft) Verbindung zur Einrichtung 102 zum Erfassen übertragen werden und in dieser entsprechend aufbereitet werden. Diese Aufbereitung kann beispielsweise eine Zeit-Spektral-Analyse unter Verwendung einer Fourier- oder Wavelet-Transformation sein, wodurch das Prüfsignal 108 in Form einer dreidimensionalen Zeit-Frequenz-Darstellung die Amplituden zu den jeweiligen Zeit- und Frequenzpunkten wiedergibt. Weiterhin kann in der Einrichtung 102 zum Erfassen bereits eine Extraktion der Merkmale (d.h. der Amplituden) in einen Merkmalsraum n-ter Dimension erfolgen und anschließend eine Transformation des Merkmalsraumes n-ter Ordnung und einen Merkmalsraum m-ter Dimension überführt werden, wobei n und m natürliche Zahlen sind, die die Bedingung $m > n$ erfüllen. Eine solche Transformation bietet daher die Möglichkeit, nicht alle möglichen Merkmalsausprägungen (beispielsweise alle erhaltenen Amplitudenwerte der Zeit-Frequenzbereichsdarstellung) zum Beurteilen des zu prüfenden Objekts zu verwenden, sondern lediglich diejenigen Merkmalsausprägungen zu verwenden, die eine spezifische Aussage über das charakteristische Muster in dem Prüfsignal 108 enthalten. Eine solche Reduktion der Dimension des Merkmalsraums bringt dann auch eine Vereinfachung der nachfolgenden Schritte mit sich, da eine geringere Anzahl von Merkmalsausprägungen zu berücksichtigen sind. Die von der Einrichtung 102 zum Erfassen erfassten (und eventuell transformierten) Merkmalsausprägungen des Prüfsignals 108 können dann zu Merkmalvektoren $\underline{X}$ gruppiert bzw. unterteilt werden.

Die gebildeten Merkmalvektoren können dann über die Verbindung 112 zur Einrichtung zum Bereitstellen des stochastischen Markov-Modells übertragen werden. Die Einrichtung 110 zum Bereitstellen des stochastischen Markov-Modells kann dabei in einer ersten Version ein bereits trainiertes stochastisches Markov-Modell umfassen, wenn die Vorrichtung 110 lediglich zur Klassifikation von zu prüfenden Objekten 104 in bekannte Güteklassen erfolgen soll, und ein Training auf neue Güteklassen nicht erforderlich ist. Beispielsweise wäre eine solche festtrainierte Vorrichtung in Form einer Prüfanlage für den Verschleiß von Eisenbahnrädern denkbar, wobei eine solche Prüfanlage in jedem Ausbesserungswerk für Schienenfahrzeuge installiert sein könnte; die Grenzwerte des Radverschleißes jedoch beispielsweise vom Eisenbahnbundesamt vorgegeben werden und somit eine neue Einteilung in die Güteklassen "in Ordnung" oder "nicht in Ordnung" nicht durch einen Mitarbeiter des Ausbesserungswerks neu einzustellen ist.

Andererseits kann die Einrichtung 110 zum Bereitstellen des stochastischen Markov-Modells aber auch ausgebildet sein, um ein Training auf eine neue Güteklasse durchführen zu können, wobei eine solche Vorrichtung 110 zur Beurteilung einer Güteklasse eines zu prüfenden Objekts dann beispielsweise in Forschungs- der Produktionsanlagen installiert sein könnte, wobei eine Neujustierung der Güteklassen erforderlich werden kann, wenn Produktionsprozessveränderungen bei der Herstellung des zu prüfenden Objekts zu einer Fehlklassifikation in die vorhandenen Güteklassen führt, oder zu einer Generierung von einer hohen Anzahl von neuen, undefinierten Güteklassen führt.

Auf die Beschreibung der Unterschiede der Verwendung von herkömmlichen HMM-Graphen und SMM-Graphen (SMM = stochastisches Markov-Modell, auch SMG genannt) und einem entsprechenden Training wird in einem nachfolgenden Abschnitt noch detaillierter eingegangen.

Ferner können die in der Einrichtung 102 zum Erfassen gebildeten Merkmalvektoren in Form einer Merkmalvektorsequenz $\underline{X}$ dann über die weitere Verbindung 117 zur Einrichtung 114 zum Bewerten übertragen werden, wobei die Einrichtung 114 zum Bewerten auch von der Einrichtung 110 zum Bereitstellen des stochastischen Markov-Modells dasselbe über die zweite Verbindung 116 enthält. Ausgehend von den über die weitere Verbindung 117 zugeführten Merkmalvektoren $\underline{X}$ und dem über die zweite Verbindung 116 zugeführten stochastischen Markov-Modell kann die Einrichtung 114 zum Bewerten auf eine nachfolgend näher erläuterte Vorgehensweise ein Klassifikationssignal ermitteln, das über die Verbindung 120 der Einrichtung 118 zum Einordnen des zu prüfenden Objekts in eine Güteklasse GK übermittelt wird. Aus diesem Klassifikationssignal kann dann die Einrichtung 118 zum Einordnen, beispielsweise unter Verwendung eines Entscheidungsschwellwerts, eine Einordnung des zu prüfenden Objekts 104 in eine Güteklasse GK durchführen, wobei eine Information über die Güteklasse GK, der das zu prüfende Objekt 104 zugeordnet wurde, an dem Ausgang 122 der Einrichtung 118 zum Einordnen entnehmbar ist.

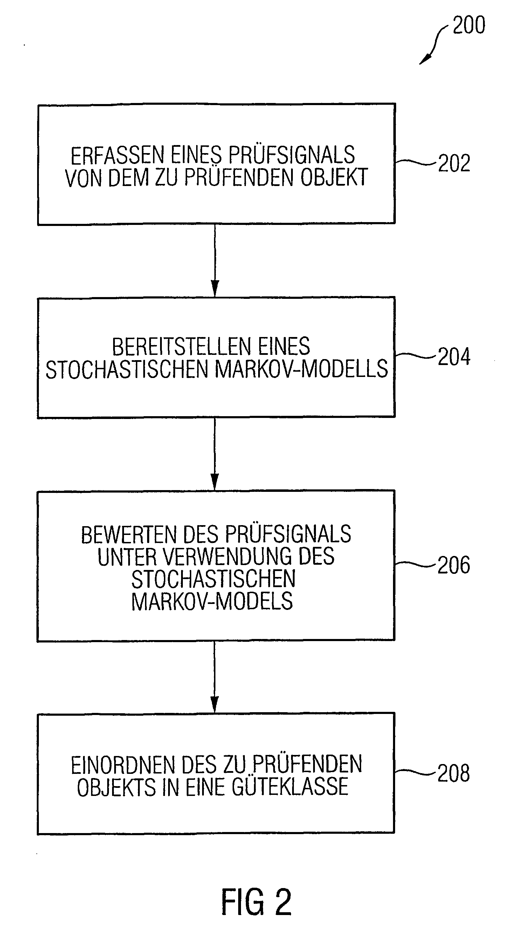

Fig. 2 zeigt ein erstes Ausführungsbeispiel des erfindungsgemäßen Verfahrens, wobei das in Fig. 2 dargestellte Verfahren 200 im wesentlichen die Abfolge von Verfahrensschritten wiedergibt, wie sie bereits mit Bezug auf die Fig. 1 näher erläutert wurden. So erfolgt in einem ersten Schritt 202 ein Erfassen eines Prüfsignals von dem zu prüfenden Objekt (passives Erfassen) oder ein Beaufschlagen des zu prüfenden Objekts mit einem akustischen Anregungssignal, wobei das Beaufschlagen dann ferner ein Erfassen des auf dem akustischen Anregungssignal basierenden Prüfsignals enthält (aktives Erfassen). Ferner kann der Schritt des Beaufschlagens 202 auch eine Zeit-Frequenzbereichstransformation des erfassten Prüfsignals enthalten, um Amplituden des Zeit- und Frequenzbereichs als Merkmale x in einem Merkmalvektor $\underline{X}$ zusammenzufassen und aus mehreren Merkmalvektoren $\underline{X}$ eine Merkmalvektorsequenz $\underline{X}$ zu bilden. Außerdem ist es möglich, eine Merkmaltransformation durchzuführen, um eine Datenreduktion in Bezug auf die entscheidenden Merkmale des Prüfsignals durchzuführen, um eine nachfolgende Verarbeitung der Merkmalvektoren zu erleichtern.

In einem weiteren Verfahrensschritt 204 kann ein Bereitstellen eines stochastischen Markov-Modells erfolgen, wobei das stochastische Markov-Modell entweder bereits vortrainiert ist oder auf der Basis der im Verfahrensschritt 202 des Erfassens gebildeten Merkmalvektoren trainiert werden kann, wobei dann während des Trainings die Merkmalvektoren auf Objekte mit bekannten Güteklassen zu beziehen sind (Bilden von Referenz-Merkmalvektoren).

In einem weiteren Verfahrensschritt 206 erfolgt ein Bewerten des Prüfsignals unter Verwendung des stochastischen Markov-Modells, um ein Klassifikationssignal zu erhalten, mit Hilfe dessen in einem weiteren Verfahrensschritt 208 ein Einordnen des zu prüfenden Objekts in eine Güteklasse erfolgen kann.

Die Grundzüge des Lösungsweges lassen sich somit durch die vier wesentlichen Schritte der Merkmalextraktion und Merkmalstransformation, des Bereitstellens (und eventuell Trainierens) des stochastischen Markov-Modells, der Klassifikation von Merkmalen und der Einordnung der klassifizierten Merkmale in eine Güteklasse unterscheiden.

Das wesentliche Merkmal der vorliegenden Erfindung ist die Verwendung eines akustischen Modells, das als stochastischer Markov-Graph (SMG) strukturiert ist, und dass eine verallgemeinerte Form von HMMs darstellt. Im Gegensatz zu HMMs ist die Graphenstruktur des verwendeten stochastischen Markov-Modells allerdings deutlich komplizierter und sollte für die Verwendung des stochastischen Markov-Graphen in akustischen zerstörungsfreien Prüfverfahren besonders ausgestaltet sein. Dies kann beispielsweise in einem speziellen Training des stochastischen Markov-Graphen erfolgen, wonach der trainierte stochastische Markov-Graph zur Klassifizierung eines zu prüfenden Objekts verwendet werden kann.

Ein stochastischer Markov-Graph lässt sich durch die Formel

$$G \;=\; \{V,\; E,\; \{N\},\; \nu^{(V)},\; \pi^{(E)}\}$$

darstellen, wobei der stochastische Markov-Graph G aus einem Satz von Knoten (oder Zuständen) V und einem Satz von gerichteten Kanten $E \subseteq V \times V$ besteht. Durch die Abbildung $\upsilon^{(v)}: V \to \{N\}$ wird jedem Knoten eine mehrdimensionale Gauss-Verteilungsdichtefunktion $N_i(\mu_i, \Sigma_i) \in \{N\}$ zugeordnet, welche definiert ist, als ein bestimmtes Gebiet im sekundären Merkmalsraum, das heißt, im Merkmalsraum mit der zweiten (kleineren) Dimension. Wie in herkömmlichen HMMs besitzt jede Kante eine Übergangswahrscheinlichkeit $\Pi^{(E)}: E \to \mathfrak{R}^{(0,1)}$, wobei $\mathfrak{R}^{(0,1)}$ die Menge der reellen Zahlen r mit $0 < r \leq 1$ bezeichnet

Für den ersten grundlegenden Schritt der Merkmalsextraktion und -transformation der akustischen Signale (d.h. des Prüfsignals) wird beispielsweise eine auf einer Kurzzeit-FFT basierenden Merkmalextraktion benutzt. Die Merkmale des akustischen Signals (d.h. des Prüfsignals) können dabei beispielsweise die Amplituden zu entsprechenden Frequenz- und Zeitpunkten der Kurzzeit-FFT sein. Da eine robuste Schätzung der Gaußverteilungen mit dem gegebenen, durch die in der Merkmalextraktion erkannten Merkmale x aufgespannten Merkmalraum $\underline{X}$, eine sehr große Menge an Trainingsdaten erfordern würde, sollte die Dimension des Merkmalsraums verkleinert werden. Dies kann durch eine sekundäre Merkmalstransformation unter zur Hilfenahme einer Hauptkomponentenanalyse (PCA = HKA) erfolgen. Eine solche Hauptkomponentenanalyse reduziert primäre Merkmalvektoren, die durch Merkmale x aus der Merkmalextraktion entstanden sind, auf sekundäre Merkmalvektoren, wobei die Merkmale der sekundären Merkmalvektoren oder Informationen über die Merkmale von sekundären Merkmalvektoren nur noch für eine Beurteilung der Güteklasse des zu prüfenden Objekts relevante Merkmale oder Informationen umfassen. Hierdurch lässt sich somit eine bedeutende Verkleinerung der Dimension eines primären Merkmalvektorraums mit den primären Merkmalvektoren auf einen sekundären Merkmalraum der sekundären Merkmalvektoren durchführen, was sich in einer bedeutenden Vereinfachung des nachgelagerten numerischen Aufwands auszeichnet.

Als nachfolgender wesentlicher Teil des erfindungsgemäßen Ansatzes erfolgt dann das Bereitstellen und/oder Trainieren des stochastischen Markov-Graphen. Insbesondere soll in diesem Zusammenhang näher auf ein Training des stochastischen Markov-Graphen eingegangen werden. Das Training der stochastischen Markov-Graphen umfasst erstens die Bestimmung von akustischen Parametern wie dem Mittelwertvektor $\mu_i$ und der Kovarianzmatrix $\Sigma_i$ der Gaussverteilungen $N_i$. Durch den Index i wird hierbei ein Zustand (d.h. Knoten) des stochastischen Markov-Graphen charakterisiert. Zweitens umfasst das Training die Bestimmung der Graphenstruktur $\{V, E, \pi^{(E)}\}$ des stochastischen Markov-Graphen. Das hier beschriebene Trainingsverfahren führt diese beiden Aufgaben gleichzeitig aus, wie nachfolgend noch detaillierter ausgeführt wird.

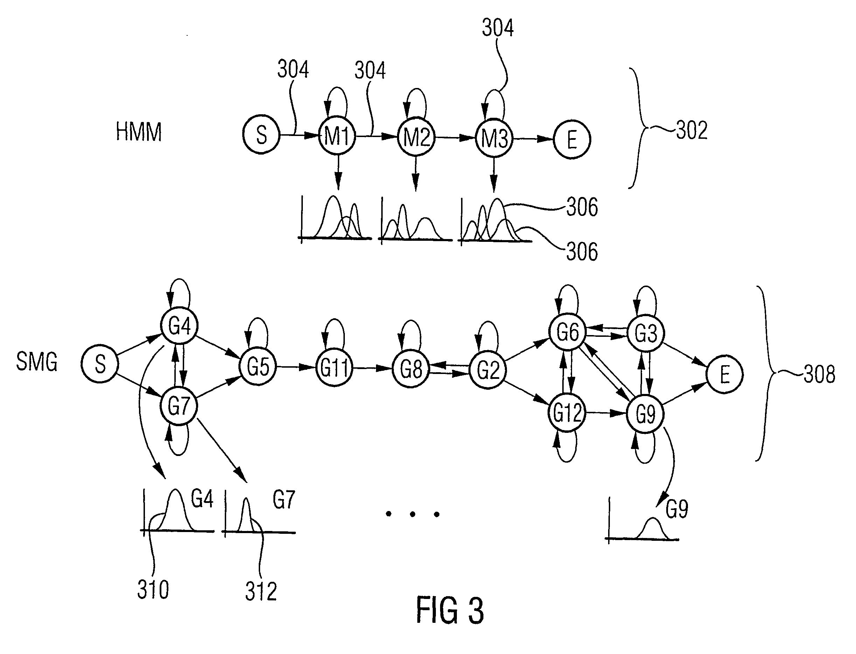

In einem ersten Schritt des Trainings wird ein SMG-Modell (SMG = stochastischer Markov-Graph) für jede Beobachtungsklasse (d.h. Güteklasse) erzeugt. Diese Modelle werden durch eine äquivalente Erzeugung einer Links-Rechts-HMM-Struktur mit M Knoten, die Zuordnung der Gaußverteilungen zu den Knoten und die Initialisierung der Parameter mit einer genügend großen Menge von Merkmalvektoren der Beobachtung initialisiert. Alle Modelle werden dabei nachfolgend auf eine äquivalente Weise trainiert. Eine solche Links-Rechts-HMM-Struktur ist nochmals in Fig. 3 dargestellt und mit dem Bezugszeichen 302 gekennzeichnet. Diese Links-Rechts-HMM-Struktur 302 umfasst drei Knoten S, M1, M2, M3 und E, die durch gerichtete Kanten miteinander verbunden sind, wobei einige der gerichteten Kanten in Fig. 3 exemplarisch durch die Bezugszeichen 304 gekennzeichnet sind. Jedem der inneren Knoten M1 bis M3 ist eine (oder mehrere) Normalverteilung(en) oder Gaußverteilung(en) zugeordnet, wie sie in Fig. 3 exemplarisch durch die Bezugszeichen 306 dargestellt sind. Zuerst erfolgt dann eine iterative Verfeinerung der Parameter der Gaußverteilungen, indem beispielsweise der Viterbi-Algorithmus angewendet wird. Weiterhin wird die Übergangswahrscheinlich zwischen den Knoten der SMGs bestimmt. Nachdem das Viterbi-Training (ein Training auf der Grundlage des Viterbi-Algorithmus) konvergiert ist, erfolgt eine Bereinigung der SMGs, indem alle Kanten gelöscht werden, deren Übergangswahrscheinlichkeiten unter einer gegebenen Übergangswahrscheinlichkeitsschwelle liegen. Danach wird eine Spaltung aller Gaußverteilungen (und ihrer entsprechenden SMG-Knoten) entlang der Achse ihrer größten Standardabweichungen durchgeführt. Die neuen Knoten (d.h. beide aus der Teilung hervorgegangen Knoten) besitzen die Übergänge zu allen Vorgängern und Nachfolgern der Originalknoten. Der Prozess des Viterbi-Trainings, Bereinigens und der Spaltung wird so lange wiederholt, bis entweder eine vorgegebene Anzahl der SMG-Knoten erreicht oder eine vorgegebene Anzahl von Knoten während der Bereinigung gelöscht wurde. Das Modell sollte nicht übertrainiert sein, d.h. wenn ein Trainingsabschnitt keine Verbesserung mehr bewirkt, die größer als eine bestimmte Verbesserungsschwelle ist, kann das Training des stochastischen Markov-Graphen abgebrochen werden. Nach dem Training, insbesondere dem Aufspalten der einzelnen Knoten M1 bis M3 und dem Bereinigen von Knoten und Übergängen zwischen Knoten, die eine geringere Übergangswahrscheinlichkeit als die Übergangswahrscheinlichkeitsschwelle haben, resultiert beispielsweise ein stochastischer Markov-Graph mit 10 Zuständen (Knoten) S, G4, G7, G5, G11, G8, G2, G12, G6, G9, G3 und E, wie er in Fig. 3 durch das Bezugszeichen 308 gekennzeichnet ist. Die Übergangswahrscheinlichkeiten der Übergänge zwischen den Knoten des SMGs 308 sind dabei aus Gründen der Übersichtlichkeit nicht dargestellt. Wie aus Fig. 3 zu erkennen ist, kann durch die Spaltung der Knoten des Graphen jedem Knoten eine einzige Normal- oder Gaußverteilung zugeordnet werden, wie es beispielsweise durch die Zuordnung der Wahrscheinlichkeitsdichte 310 zum Knoten G4, der Wahrscheinlichkeitsdichte 312 zum Knoten G7 oder der Wahrscheinlichkeitsdichte 314 zum Knoten G9 dargestellt ist. Hierdurch erhöht sich zwar die Komplexität des Graphen, zugleich steigt jedoch auch die Klassifikationsgüte bei Verwendung dieses Graphen.

Nachdem ein derart trainierter stochastischer Markov-Graph SMG 308 bereitgestellt wurde, kann die Bewertung des Prüfsignals unter Verwendung des bereitgestellten (und trainierten) stochastischen Markov-Graphen und das Einordnen des zu prüfenden Objekts in eine Güteklasse erfolgen. Hierzu wird zunächst für eine Dekodierung, (d.h. eine Bewertung des Prüfsignals für eine Klassifizierung) ein linearer Graph X aus einer Merkmalvektorsequenz $\underline{X}$ der Beobachtung gebildet, wobei die Merkmalvektorsequenz $\underline{X}$ sich aus den einzelnen Merkmalvektoren $X_1$, $X_2$, $X_3$ .... usw. zusammensetzt und die einzelnen Merkmalvektoren beispielsweise Amplitudenwerten zu Zeit- und Frequenzpunkten eines Ausschnittes aus der Zeit-Frequenzbereichsdarstellung entsprechen. Weiterhin ordnet der lineare Graph X exakt einen Merkmalvektor einem Knoten des Graphen zu. Danach folgt eine Anpassung des Graphen an die SMG-Modelle $G_m$ aller M Beobachtungsklassen. Als lokales Abstandsmaß zwischen dem Merkmalvektor $X_j$ (wobei der Index j einen Knoten $v_j$ bezeichnet) und einer Gaußverteilung des Knotens $v_j$ des m-ten SMG-Modells $G_m$ wird die Log-Likelihood LL (Glaubwürdigkeit) genutzt, der eine Emissionswahrscheinlichkeit der Merkmalsausprägungen $x_i$ eines Merkmalvektors $X_i$ kennzeichnet und durch die nachstehende Formel beschrieben werden kann:

$$ LL\left(\underline{x}_i \mid N\left(v_{j,m}\right)\right) = -\left(\underline{x}_i - \underline{\mu}_{j,m}\right)^T \cdot \sum\nolimits_{j,m}^{-1} \left(\underline{x}_i - \underline{\mu}_{j,m}\right) - \ln\left|\sum\nolimits_{j,m}\right| $$

Hierbei bezeichnet der Ausdruck $N(v_{j,m}) = (\underline{\mu}_{j,m}, \Sigma_{j,m})$ die Gaußverteilung verbunden mit dem Knoten $v_j$ des SMG m, wobei der Ausdruck $\underline{\mu}_{j,m}$ den Mittelwertvektor des j-ten Knotens des m-ten SMG-Modells bezeichnet und der Ausdruck $\Sigma_{j,m}$ die Kovarianzmatrix des j-ten Knotens des m-ten SMG bezeichnet. Eine Viterbi-Suche bestimmt einen Pfad $U^*_m$ durch den stochastischen Markov-Graphen $G_m$, welcher die Emissionswahrscheinlichkeitssumme für die Merkmalvektorsequenz $\underline{X}$ der Beobachtung maximiert, was durch die folgende Formel mathematisch ausgedrückt werden kann:

$$ U^*_m = \arg\max_{U \subseteq G_m \times \underline{X}} \left[ \sum_{i=1}^{|\underline{X}|} LL\left(\underline{x}_i \mid N\left(u_i\right)\right) \right] $$

$N(u_i)$ bezeichnet dabei mit dem Knoten $u_i \in U$ verbundene Gaußverteilung und $|\underline{X}|$ bezeichnet die Länge der Merkmalvektorsequenz $\underline{X}$. Durch den Ausdruck $LL^*(\underline{X}|G_m)$ kann ferner die Emissionswahrscheinlichkeit des besten Weges im Modell $G_m$ bei gegebener Merkmalvektorsequenz $\underline{X}$ bezeichnet werden.

Im Falle eines Mehrklassenmodells (M > 1) wird dasjenige Modell m* gewählt, das die größte Emissionswahrscheinlichkeit für die Beobachtung als Erkennungsresultat liefert, was durch die nachfolgende Formel ausgedrückt werden kann:

$$m^* = \arg\max_{G_m} LL^*\left(\underline{X} \mid G_m\right)$$

Weiterhin kann die Emissionswahrscheinlichkeit m* bzw. U*$_m$ als Konfidenzmaß genutzt werden, welche es erlaubt, eine Aussage zu treffen, wie ähnlich Beobachtung und gewählte Klasse sind.

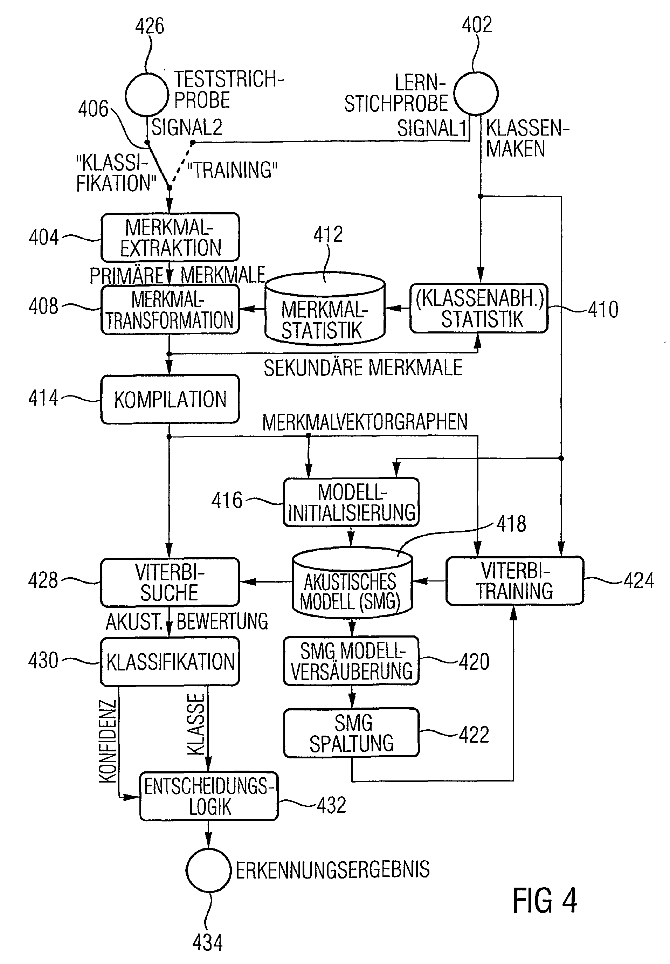

In Fig. 4 ist ein Ablaufdiagramm eines zweiten Ausführungsbeispieles des erfindungsgemäßen Verfahrens dargestellt, bei dem ein Training des stochastischen Markov-Graphen durchgeführt wird. Zuerst wird durch eine Lernstichprobe 402 ein Signal1 einer Merkmalsextraktionsstufe 404 zur Verfügung gestellt, wobei ein Schalter 406 in der in Fig. 4 gestrichelt dargestellten Position "Training" geschaltet ist. Durch die Merkmalsextraktionsstufe 404 werden primäre Merkmale ermittelt und weiter in einer Merkmalstransformationsstufe 408 diese primären Merkmale in sekundäre Merkmale transformiert. Die sekundären Merkmale werden einer statistischen Einheit 410 zur klassenabhängigen Aufbereitung zugeführt, wobei die statistische Einheit 410 zugleich aus der Lernstichprobe 402 eine Information über die Klassenmarken enthält, die dem Signal1 inhärent sind. Durch die statistische Einheit 410 kann dann eine charakteristische Merkmalstatistik ermittelt werden, wie sie in Fig. 4 durch das Bezugszeichen 412 gekennzeichnet ist. Diese Merkmalstatistik 412 umfasst dann eine Information über signifikante Merkmalsausprägungen des Signals1, woraus sich Rückschlüsse auf die Klasse des dem Signal1 zugeordneten Prüfobjekts ergeben. Insbesondere bedeutet dies, dass in der Merkmalstatistik 412 ein Zusammenhang ermittelt werden kann, der eine Erkennung der Klasse auf der Basis von wenigen relevanten Merkmalen ermöglicht, wodurch bei der Merkmaltransformation 408 eine Reduktion der für eine eindeutige Klassifizierung wichtigen Merkmale möglich wird. Die Merkmalstatistik 412 kann somit als Grundlage für die Merkmaltransformation 408 dienen, was in Fig. 4 durch die Verbindung zwischen den Elementen mit den Bezugszeichen 412 und 408 gekennzeichnet ist. Weiterhin können die sekundären Merkmale durch eine Kompilation 414 in Merkmalvektorgraphen überführt werden, die sich zunächst für eine Modellbildung als Modellinitialisierung 416 verwenden lassen. Ferner kann auch die von der Lernstichprobe 402 bereitgestellte Information über die Klassenmarken bei der Modellinitialisierung 416 berücksichtigt werden. Aus der Modellinitialisierung kann ein akustisches Modell 418 in Form eines stochastischen Markov-Graphen (SMG) bereitgestellt werden, welches im Rahmen des Modelltrainings durch die Schritte der SMG-Modellsäuberung 420 und der SMG-Spaltung 422 sowie dem hieran anschließenden Viterbi-Training 424 verändert werden kann. Das Viterbi-Training 424 kann hierbei Informationen aus der SMG-Spaltung 422, der von der Lernstichprobe 402 ausgegeben Informationen über Klassenmarken und den nach der Kompilation 414 bereitgestellten Merkmalvektorgraphen verwenden, um verschiedene Zustände und Übergänge zwischen verschiedenen Zuständen des akustischen Modells zu verändern. Ein solches Training kann über mehrere Zyklen der SMG-Modellsäuberung 420, der SMG-Spaltung 422 und des Viterbi-Trainings 424 erfolgen, wobei das akustische Modell 418 dann als ausreichend trainiert zu betrachten ist, wenn eine weitere Trainingsschleife keine wesentliche Veränderung der Modellstruktur mehr ergibt. Ein solcher Trainingsabbruch kann beispielsweise nach einer Schwellwertvorgabe und einem Vergleich einer in dem Trainingsdurchlauf bestimmten Größe mit dem Schwellwert erfolgen. Ist das akustische Modell 418 dann ausreichend trainiert, kann der Schalter 406 von der Position "Training" in die Position "Klassifikation" umgeschaltet werden und unbekannte Daten einer Teststichprobe 426 von Objekten, deren Güteklasse nicht bekannt ist, können der Merkmalextraktion 404 zugeführt werden. Dies erfolgt über das Signal2, das beispielsweise ein Zeitbereichssignal ist, das in der Merkmalextraktion 404 einer Kurzzeit-FFT unterzogen wird, wobei die primären Merkmale dann beispielsweise Amplituden zu definierten Zeit- und Frequenzpunkten sind. Die primären Merkmale werden dann durch die Merkmaltransformation 408 in sekundäre Merkmale umgeformt, die anschließend durch eine Kompilation 414 wieder in einen Merkmalvektorgraphen überführt werden. Der Merkmalvektorgraph wird dann einer Viterbi-Suche 428 zugeführt, die unter Berücksichtigung des akustischen Modells 418 eine akustische Bewertung des Merkmalvektorgraphen durchführt und in einer nachfolgenden Klassifikation 430 eine Information bereitstellt, die eine direkte Einordnung des Prüfobjekts, von dem das Signal2 stammt, ermöglicht. Die Klassifikation in der mit dem Bezugszeichen 430 gekennzeichneten Einheit kann somit erstens ein Signal KLASSE bereitstellen, aus dem eine Entscheidungslogik 432 beispielsweise unter Verwendung eines Entscheidungsschwellwerts ein Erkennungsergebnis 434 (d.h. eine Einordnung des zu prüfenden Objekts in eine Güteklasse) liefert. Die Entscheidungslogik 432 braucht jedoch nicht auf der Basis einer Entscheidungsschwelle arbeiten, vielmehr können problemabhängige Entscheidungskriterien verwendet werden, die entsprechend der gewünschten Prüfaufgabe mit nicht-sprachlichen akustischen Signalen festzulegen sind. Weiterhin kann durch die Klassifikation 430 eine "KONFIDENZ"-Information der Entscheidungslogik 432 bereitgestellt werden, woraus die Entscheidungslogik eine Aussage über eine mögliche Abweichung des Entscheidungsergebnisses von einem "wahren Klassifikationsergebnis" unter Verwendung des akustischen Modells 418 resultieren würde. Ein solches Konfidenzmaß kann beispielsweise eine Abweichung zwischen einem Wert des Signals KLASSE (beispielsweise des Wertes U*$_m$) und einem charakteristischen Wert beispielsweise einem Mittelwert von Werten des Signals KLASSE sein, die der Güteklasse zugeordnet sind. Durch eine solche "KONFIDENZ"-Information bzw. ein solches Konfidenzmaß lässt sich somit auch eine Aussage über die Qualität der Einordnung eines zu prüfenden Objekts in eine Güteklasse durchführen.

Abhängig von den Gegebenheiten kann das erfindungsgemäße Verfahren zum Beurteilen einer Güteklasse eines zu prüfenden Objekts in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Verfahrens, wenn das Computerprogrammprodukt auf einem Rechner abläuft. Mit anderen Worten ausgedrückt, kann die Erfindung somit als ein Computerprogramm mit einem Programmcode zur Durchführung des Verfahrens realisiert werden, wenn das Computerprogramm auf einem Computer abläuft.

Zusammenfassend ist anzumerken, dass durch das vorstehend beschriebene Verfahren und die vorstehend beschriebene Vorrichtung nicht sprachliche akustische Signale analysiert und klassifiziert werden können, wobei Algorithmen der Sprachverarbeitung, insbesondere die Strukturmodelle der stochastischen Markov-Graphen verwendet werden können, um ein universelles, nicht auf eine bestimmte Prüfaufgabe verfeinertes Verfahren zu entwickeln. Entgegen der aus der Sprachverarbeitung bekannten Vorgehensweisen ist in diesem Anwendungsfall eine spezielle Anpassung der verwendeten Strukturmodelle notwendig. Das in den obigen Ausführungen beschriebene Verfahren kann dabei insbesondere für die folgenden technischen Anwendungsgebiete eingesetzt werden:

Produktionsüberwachung ("process integrated non-distructive testing"- PINT)
Die Eigenschaften von Produktionsprozessen (oder die von Bauteilen, die aus dem Produktionsprozess fließen) können überwacht und bewertet werden. Dabei sollte der entwickelte Algorithmus automatisch auf Produktionsveränderungen, die keinen Einfluss auf die Qualität des produzierten Bauteils haben, reagieren und sich ihnen anpassen.
Lebensdaueranalyse ("life cycle prediction")
Meist werden kleinere Bauteile (Ventilsitze, Kontaktflächen von Schaltschützen), aber beispielsweise auch Eisenbahnräder im bestimmungsgemäßen Einsatz auf Verschleiß untersucht. Zusätzlich zu den Verschleiß-Untersuchungen wird eine repräsentative Vorhersage der Restlebensdauer durchgeführt, um einem bevorstehenden Ausfall rechtzeitig vorzubeugen.
Zustandsüberwachung ("health monitoring")
Hier stehen die Struktursicherheit und die Gewährleistung der Betriebsfestigkeit im Vordergrund. Dabei werden Grenzwerte ermittelt und bewertet. Ein Beispiel hierfür ist die Zustandsüberwachung von Konstruktionselementen in Flugzeugen. So kann beispielsweise die Integrität von Flugzeug-Rumpfschalen permanent während des Fluges überwacht werden.

Im Gegensatz zur Spracherkennung beruht die vorliegende Erfindung auf einer speziellen Anpassung und Anwendung des Verfahrens der Spracherkennung auf technische Signale. Eine einfache Übernahme der Verfahren kann jedoch aus folgenden Gründen nicht funktionieren:
Die zu klassifizierenden Signale (Prüfsignale) werden in der vorliegenden Erfindung von völlig verschiedenen Prozessen erzeugt und weisen damit auch andere Eigenschaften auf, nach denen eine Klassifikation erfolgen kann.
Die Merkmalextraktion für Sprache ist psychoakustisch motiviert (mel-skalierte Bänder). Die Merkmale für technische Signale können ganz andere sein, wodurch sich eine einfache Übertragung der Sprachdatenerkennung auf die Erkennung von Strukturen in technischen Signalen nicht direkt, sondern nur unter geeigneten Anpassungen einsetzen lässt.
Bei technischen Signalen ist die Modellstruktur meist nicht bekannt. Hier wird also ein Strukturtraining benötigt, was bei der Spracherkennung nicht unbedingt nötig ist. Vielmehr kann bei Sprachsignalen bereits unter Rückgriff auf bekannte psychoakustische Zusammenhänge eine grundlegende Strukturmodulierung erfolgen, die zumeist auch noch in einem wenig trainierten (oder untrainierten) Zustand brauchbare Ergebnisse liefert.
Die Klassifikationsstrategie ist für technische Signale anders als bei der Spracherkennung. Zur Klassifikation von technischen Signalen werden u.a. Entscheidungsschwellwerte oder der Verlauf der Konfidenzinformation betrachtet. Bei der Spracherkennung besteht die Klassifikationsaufgabe in einer Ausgabe von Symbolfolgen bzw. Sätzen.

## Patentansprüche

1. Vorrichtung (100) zum Beurteilen einer Güteklasse eines zu prüfenden Objekts (104), mit folgenden Merkmalen:

einer Einrichtung (102) zum Erfassen eines akustischen, nicht-sprachlichen Prüfsignals (108) von dem zu prüfenden Objekt (104);
einer Einrichtung (110) zum Bereitstellen eines stochastischen Markov-Modells (SMM oder SMG), das auf der Grundlage von Referenzmessungen von Objekten bekannter Güteklassen Zustände und Übergange zwischen Zuständen umfasst, wobei in dem stochastischen Markov-Modell (SMG) jedem Zustand (G4, G7, G9) eine einzige Wahrscheinlichkeitsdichteverteilung zugeordnet ist und wobei mehrere Zustände (G6, G12) Übergänge von einem gemeinsamen Vorgänger-Zustand (G2) besitzen;

einer Einrichtung (114) zum Bewerten des Prüfsignals (108) unter Verwendung des stochastischen Markov-Modells (SMM); und

einer Einrichtung (118) zum Einordnen des zu prüfenden Objekts in eine Güteklasse (GK), basierend auf der Bewertung des Prüfsignals (108).

2. Vorrichtung (100) zum Beurteilen gemäß Anspruch 1, die ferner eine Einrichtung zum Beaufschlagen des zu prüfenden Objekts (104) mit einem akustischen Anregungssignal aufweist, wobei die Einrichtung (102) zum Erfassen ausgebildet ist, um ansprechend auf das akustische Anregungssignal das Prüfsignal (108) zu erfassen.

3. Vorrichtung (100) zum Beurteilen gemäß Anspruch 1 oder 2, bei der die Einrichtung (110) zum Bereitstellen ausgebildet ist, um Referenzmessdaten von Objekten bekannter Güteklassen zu empfangen, um ausgehend von den Referenzmessdaten in dem stochastischen Markov-Modell Zustände und Übergänge zwischen den Zuständen auszubilden.

4. Vorrichtung (100) zum Beurteilen gemäß Anspruch 3, bei dem die Einrichtung (110) zum Bereitstellen ausgebildet ist, um den Übergängen zwischen den Zuständen je eine Übergangswahrscheinlichkeit ($\pi^{(E)}$) zuzuordnen, wobei die Einrichtung (110) zum Bereitstellen ferner ausgebildet ist, um einen Übergang zwischen einem ersten Zustand und einem zweiten Zustand zu verhindern, wenn die Übergangswahrscheinlichkeit von dem ersten Zustand in dem zweiten Zustand kleiner als ein vorbestimmter Schwellwert ist.

5. Vorrichtung (100) zum Beurteilen gemäß einem der Ansprüche 3 oder 4, bei der die Einrichtung (110) zum Bereitstellen ausgebildet ist, um einen Zustand (v) in eine Mehrzahl von Zuständen aufzuspalten.

6. Vorrichtung (100) zum Beurteilen gemäß einem der Ansprüche 1 bis 5, bei der die Einrichtung (102) zum Erfassen ausgebildet ist, um beim Erfassen des Prüfsignals (108) dasselbe in einen primären Merkmalraum n-ter Dimension zu extrahieren und den primären Merkmalraum n-ter Dimension in einen sekundären Merkmalraum m-ter Dimension zu transformieren, wobei die m und n natürliche Zahlen sind, die die Bedingung m größer n erfüllen.

7. Vorrichtung (100) zum Beurteilen gemäß einem der Ansprüche 1 bis 6, bei der die Einrichtung (110) zum Bereitstellen ausgebildet ist, um den Zuständen des stochastischen Markov-Modells (SMM) je eine Wahrscheinlichkeitsfichtefunktion (N(v)) und ein aus Signalwerten ($x_i$) des Prüfsignals (108) gebildeten Merkmalvektor ($\underline{X}$) zuzuweisen.

8. Vorrichtung (100) zum Beurteilen gemäß Anspruch 7, bei der die Einrichtung (114) zum Bewerten ausgebildet ist, um eine Log-Likelihood (LL) zwischen der Wahrscheinlichkeitsdichtefunktion ($N(v_i)$) des Zustands ($v_i$) und dem dem Zustand zugewiesenen Merkmalsvektor ($X_i$) zu bilden.

9. Vorrichtung (100) zum Beurteilen gemäß Anspruch 7 oder 8, bei der die Einrichtung (114) zum Bewerten ausgebildet ist, um das Bewerten auf der Basis des Viterbi-Algorithmus durchzuführen.

10. Vorrichtung (100) zum Beurteilen gemäß Anspruch 1 bis 9, bei der Einrichtung (114) zum Bewerten ausgebildet ist, einen Klassifikationswert ($U^*_m$) zum Bestimmen einer Güteklasse (GK) auszugeben und die Einrichtung (118) zum Einordnen ausgebildet ist, um den Klassifikationswert ($U^*_m$) zum Einordnen des zu prüfenden Objekts in die Güteklasse zu verwenden, wobei die Einrichtung (118) zum Einordnen ferner ausgebildet ist, um eine Abweichung zwischen dem Klassifikationswert ($U^*_m$) und einem für die Güteklasse charakteristischen Wert als Konfidenzmaß für eine Ähnlichkeit des zu prüfenden Objekts in Bezug auf eine Güteklasse zu verwenden.

11. Vorrichtung (100) zum Beurteilen gemäß einem der Ansprüche 1 bis 10, bei der die Einrichtung (110) zum Bereitstellen ausgebildet ist, um einer ersten Güteklasse zugeordnetes erstes Markov-Modell bereitzustellen und ein einer zweiten Güteklasse zugeordnetes zweites stochastisches Markov-Modell bereitzustellen, das auf der Grundlage von Referenzmessungen von Objekten bekannter Güteklassen zweite Zustände und zweite Übergänge zwischen den zweiten Zuständen umfasst, wobei die Einrichtung (114) zum Bewerten des Prüfsignals ausgebildet ist, um das zweite stochastische Markov-Modell zu einer Bewertung des Prüfsignals (108) in die erste Güteklasse oder die zweite Güteklasse zu verwenden.

**12.** Vorrichtung (100) zum Beurteilen gemäß einem der Ansprüche 1 bis 10, bei der die Einrichtung (118) zum Einordnen ausgebildet ist, um das Einordnen des zu prüfenden Objekts in die Güteklasse auf der Basis eines Entscheidungsschwellwerts durchzuführen.

**13.** Verfahren (100) zum Beurteilen einer Güteklasse eines zu prüfenden Objekts (104), mit folgenden Schritten:

Erfassen eines akustischen, nicht-sprachlichen Prüfsignals (108) von dem zu prüfenden Objekt (104);
Bereitstellen (204) eines stochastischen Markov-Modells (SMM), das auf der Grundlage von Referenzmessungen von Objekten bekannter Güteklassen Zustände und Übergänge zwischen Zuständen umfasst, wobei in dem stochastischen Markov-Modell (SMG) jedem Zustand (G4, G7, G9) eine einzige Wahrscheinlichkeitsdichteverteilung zugeordnet ist und wobei mehrere Zustände (G6, G12) Übergänge von einem gemeinsamen Vorgänger-Zustand (G2) besitzen;
Bewerten des Prüfsignals (206) unter Verwendung des stochastischen Markov-Modells (SMM); und
Einordnen (208) des zu prüfenden Objekts in eine Güteklasse (GK), basierend auf der Bewertung des Prüfsignals (108).

**14.** Computerprogramm mit Programmcode zur Durchführung des Verfahrens gemäß Anspruch 13, wenn das Programm auf einem Computer abläuft.

**Claims**

**1.** Device (100) for assessing a quality class of an object (104) to be tested, comprising:

means (102) for detecting an acoustic, non-voice test signal (108) from the object (104) to be tested;
means (110) for providing a stochastic Markov model (SMM or SMG) including states and transitions between states on the basis of reference measurements of objects of known quality classes, in the stochastic Markov model (SMG) each state (G4, G7, G9) having a single probability density distribution associated therewith, and several states (G6, G12) having transitions from a shared predecessor state (G2);
means (114) for evaluating the test signal (108) using the stochastic Markov model (SMM); and
means (118) for associating the object to be tested with a quality class (GK) based on the evaluation of the test signal (108).

**2.** Device (100) for assessing according to claim 1, further comprising means for applying an acoustic excitation signal to the object (104) to be tested, wherein the means (102) for detecting is designed to detect the test signal (108) in response to the acoustic excitation signal.

**3.** Device (100) for assessing according to claim 1 or 2, wherein the means (110) for providing is designed to receive reference measurement data of objects of known quality classes to form states and transitions between the states in the stochastic Markov model based on the reference measurement data.

**4.** Device (100) for assessing according to claim 3, wherein the means (110) for providing is designed to associate one transition probability ($\pi^{(E)}$) each with the transitions between the states, wherein the means (110) for providing is further designed to prevent a transition between a first state and a second state if the transition probability from the first state to the second state is less than a predetermined threshold.

**5.** Device (100) for assessing according to claim 3 or 4, wherein the means (110) for providing is designed to split a state ($v$) into a plurality of states.

**6.** Device (100) for assessing according to one of claims 1 to 5, wherein the means (102) for detecting is designed to extract, when detecting the test signal (108), the same into a primary n-th dimension feature space and to transform the primary n-th dimension feature space to a secondary m-th dimension feature space, wherein m and n are natural numbers meeting the condition that m is larger than n.

**7.** Device (100) for assessing according to one of claims 1 to 6, wherein the means (110) for providing is designed to assign a probability density function ($N(v)$) and a feature vector ($\underline{X}$) formed from signal values ($x_i$) of the test signal (108) to each state of the stochastic Markov model (SMM).

8. Device (100) for assessing according to claim 7, wherein the means (114) for evaluating is designed to form a log-likelihood (LL) between the probability density function ($N(v_i)$) of the state ($v_i$) and the feature vector ($X_i$) assigned to the state.

9. Device (100) for assessing according to claim 7 or 8, wherein the means (114) for evaluating is designed to perform the evaluation on the basis of the Viterbi algorithm.

10. Device (100) for assessing according to one of claims 1 to 9, wherein the means (114) for evaluating is designed to output a classification value ($U^*_m$) for determining a quality class (GK), and the means (118) for associating is designed to use the classification value ($U^*_m$) for associating the object to be tested with the quality class, wherein the means (118) for associating is further designed to use a deviation between the classification value ($U^*_m$) and a value characteristic for the quality class as confidence measure for a similarity of the object to be tested with respect to a quality class.

11. Device (100) for assessing according to one of claims 1 to 10, wherein the means (110) for providing is designed to provide a first Markov model associated with a first quality class and to provide a second stochastic Markov model associated with a second quality class including second states and second transitions between the second states on the basis of reference measurements of objects of known quality classes, wherein the means (114) for evaluating the test signal is designed to use the second stochastic Markov model for an evaluation of the test signal (108) into the first quality class or the second quality class.

12. Device (100) for assessing according to one of claims 1 to 10, wherein the means (118) for associating is designed to perform the association of the object to be tested with the quality class on the basis of a decision threshold.

13. Method (100) for assessing a quality class of an object (104) to be tested, comprising:

detecting an acoustic, non-voice test signal (108) from the object (104) to be tested;
providing (204) a stochastic Markov model (SMM) including states and transitions between states on the basis of reference measurements of objects of known quality classes, in the stochastic Markov model (SMG) each state (G4, G7, G9) having a single probability density distribution associated therewith, and several states (G6, G12) having transitions from a shared predecessor state (G2);
evaluating the test signal (206) using the stochastic Markov model (SMM); and
associating (208) the object to be tested with a quality class (GK) based on the evaluation of the test signal (108).

14. Computer program with program code for performing the method of claim 13 when the program runs on a computer.

**Revendications**

1. Dispositif (100) pour évaluer une classe de qualité d'un objet à tester (104), aux caractéristiques suivantes:

un moyen (102) destiné à détecter un signal de test acoustique non verbal (108) de l'objet à tester (104);
un moyen (110) destiné à mettre à disposition un modèle de Markov stochastique (SMM ou SMG) qui comprend, sur base de mesures de référence d'objets de classes de qualité connues, des états et transitions entre états, dans le modèle de Markov stochastique (SMG) étant associés à chaque état (G4, G7, G9) une seule répartition de densité de probabilité et plusieurs états (G6, G 12) possédant des transitions d'un état prédécesseur commun (G2);
un moyen (114) destiné à évaluer le signal de test (108) à l'aide du modèle de Markov stochastique (SMM); et
un moyen (118) destiné à classifier l'objet à tester dans une classe de qualité (GK), sur base de l'évaluation du signal de test (108).

2. Dispositif (100) pour évaluer selon la revendication 1, présentant par ailleurs un moyen destiné à soumettre l'objet à tester (104) à un signal d'excitation acoustique, le moyen (102) destiné à détecter étant réalisé de manière à détecter le signal de test (108) en réaction au signal d'excitation acoustique.

3. Dispositif (100) pour évaluer selon la revendication 1 ou 2, dans lequel le moyen (110) destiné à mettre à disposition est réalisé de manière à recevoir des données de mesure de référence d'objets de classes de qualité connues, pour former, partant des données de mesure de référence dans le modèle de Markov stochastique, des états et transitions entre les états.

4. Dispositif (100) pour évaluer selon la revendication 3, dans lequel le moyen (110) destiné à mettre à disposition est réalisé de manière à associer à chacune des transitions entre les états une probabilité de transition ($\pi^{(E)}$), le moyen (110) destiné à mettre à disposition étant par ailleurs réalisé de manière à éviter une transition entre un premier état et un deuxième état lorsque la probabilité de transition du premier état au deuxième état est inférieure à une valeur de seuil prédéterminée.

5. Dispositif (100) pour évaluer selon l'une des revendications 3 ou 4, dans lequel le moyen (110) destiné à mettre à disposition est réalisé de manière à diviser un état (v) en une pluralité d'états.

6. Dispositif (100) pour évaluer selon l'une des revendications 1 à 5, dans lequel le moyen (102) destiné à détecter est réalisé de manière à, lors de la détection du signal de test (108), extraire ce dernier pour obtenir un espace de caractéristique primaire de n-ième dimension et à transformer l'espace de caractéristique primaire de n-ième dimension en un espace de caractéristique secondaire de m-ième dimension, m et n étant des nombres naturels qui remplissent la condition que m soit supérieur à n.

7. Dispositif (100) pour évaluer selon l'une des revendications 1 à 6, dans lequel le moyen (110) destiné à mettre à disposition est réalisé de manière à associer à chacun des états du modèle de Markov stochastique (SMM) une fonction de densité de probabilité (N(v)) et un vecteur de caractéristique ($\underline{X}$) formé à partir de valeurs de signal ($x_i$) du signal de test (108).

8. Dispositif (100) pour évaluer selon la revendication 7, dans lequel le moyen (114) destiné à évaluer est réalisé de manière à former une log-probabilité (LL) entre la fonction de densité de probabilité ($N(v_i)$) de l'état ($v_i$) et le vecteur de caractéristique ($X_i$) attribué à l'état.

9. Dispositif (100) pour évaluer selon la revendication 7 ou 8, dans lequel le moyen (114) destiné à évaluer est réalisé de manière à effectuer l'évaluation sur base de l'algorithme de Viterbi.

10. Dispositif (100) pour évaluer selon les revendications 1 à 9, dans lequel le moyen (114) destiné à évaluer est réalisé de manière à sortir une valeur de classification ($U^*_m$) pour déterminer une classe de qualité (GK) et le moyen (118) destiné à classifier est réalisé de manière à utiliser la valeur de classification ($U^*_m$) pour classifier l'objet à tester dans la classe de qualité, le moyen (118) destiné à classifier étant par ailleurs réalisé de manière à utiliser un écart entre la valeur de classification ($U^*_m$) et une valeur caractéristique de la classe de qualité comme mesure de confiance d'une similitude de l'objet à tester par rapport à une classe de qualité.

11. Dispositif (100) pour évaluer selon l'une des revendications 1 à 10, dans lequel le moyen (110) destiné à mettre à disposition est réalisé de manière à mettre à disposition un premier modèle de Markov associé à une première classe de qualité et à mettre à disposition un deuxième modèle de Markov stochastique associé à une deuxième classe de qualité, lequel comprend, sur base de mesures de référence d'objets de classes de qualité connues, des deuxièmes états et des deuxièmes transitions entre les états, le moyen (114) destiné à évaluer le signal de test étant réalisé de manière à utiliser le deuxième modèle de Markov stochastique pour une évaluation du signal de test (108) dans la première classe de qualité ou la deuxième classe de qualité.

12. Dispositif (100) pour évaluer selon l'une des revendications 1 à 10, dans lequel le moyen (118) destiné à classifier est réalisé de manière à effectuer la classification de l'objet à tester dans la classe de qualité sur base d'une valeur de seuil de décision.

13. Procédé (100) pour évaluer une classe de qualité d'un objet à tester (104), aux étapes suivantes consistant à:

détecter un signal de test acoustique non verbal (108) de l'objet à tester (104);
mettre à disposition un modèle de Markov stochastique (SMM) qui comprend, sur base de mesures de référence d'objets de classes de qualité connues, des états et transitions entre états, dans le modèle de Markov stochastique (SMG) étant associés à chaque état (G4, G7, G9) une seule répartition de densité de probabilité et plusieurs états (G6, G 12) possédant des transitions d'un état prédécesseur commun (G2);
évaluer le signal de test (206) à l'aide du modèle de Markov stochastique (SMM); et
classifier (208) l'objet à tester dans une classe de qualité (GK), sur base de l'évaluation du signal de test (108).

**14.** Programme d'ordinateur avec un code de programme pour réaliser le procédé selon la revendication 13 lorsque le programme est exécuté sur un ordinateur.

FIG 1

200

```
┌─────────────────────────────────────┐
│      ERFASSEN EINES PRÜFSIGNALS      │ ─── 202
│    VON DEM ZU PRÜFENDEN OBJEKT       │
└─────────────────────────────────────┘
                  │
                  ▼
┌─────────────────────────────────────┐
│        BEREITSTELLEN EINES           │ ─── 204
│    STOCHASTISCHEN MARKOV-MODELLS     │
└─────────────────────────────────────┘
                  │
                  ▼
┌─────────────────────────────────────┐
│     BEWERTEN DES PRÜFSIGNALS         │
│     UNTER VERWENDUNG DES             │ ─── 206
│        STOCHASTISCHEN                 │
│        MARKOV-MODELS                  │
└─────────────────────────────────────┘
                  │
                  ▼
┌─────────────────────────────────────┐
│   EINORDNEN DES ZU PRÜFENDEN         │ ─── 208
│   OBJEKTS IN EINE GÜTEKLASSE         │
└─────────────────────────────────────┘
```

FIG 2

FIG 3

FIG 4

FIG 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6477485 B1
- US 5465321 A

**In der Beschreibung aufgeführte Nicht-Patentliteratur**

- **P. HOLSTEIN ; M. KOCH ; D. HIRSCHFELD ; R. HOFFMANN ; D. BADER ; K. AUGSBURG.** A Strategy for Signal Recognition under Adverse Conditions. *Proc. 32nd Conf. Internoise,* 2003
- **D. ZHANG ; Y. ZENG ; X. ZHOU ; CHENG Y.** The pattern recognition of non-destructive testing based on HMM. *Proc. 4th World Congress on Intelligent Control and Automation (Cat. No. 02EX527,* 2002, vol. 3, 2198-2202
- **P. BARUAH ; R.B. CHINNMA.** HMMs for diagnostics and prognostics in machining processes. *Proc. 57th Meeting of the Society for Machinery Failure Prevention Technology,* 2003, 389-398
- **A.R. TAYLOR ; S. R. DUNCAN.** A comparison of techniques for monitoring process faults. *Proc. Conf. Control Systems,* 2002, 323-327
- **H.Y.K. LAU.** A hidden markov model-based assembly contact recognition system. *Mechatronics,* 2003, vol. 13 (8-9), 1001-1023
- **F. WOLFERTSTETTER ; G. RUSKE.** Structured Markov models for speech recognition. *Proc. ICASSP,* 1995, 544-547
- **M. EICHNER ; M. WOLFF ; R. HOFFMANN.** A unified approach for speech synthesis and speech recognition using stochastic Markov graphs. *Proc. 6th Int. Conf. Spoken Language Processing (ICSLP,* 2000, vol. 1, 701-704
- **M. EICHNER ; S. OHNEWALD ; M. WOLFF ; R. HOFFMANN.** Speech synthesis using Stochastic Markov Graphs. *Proc. ICASSP,* 05. Mai 2001
- **WHITNEY, D. A. et al.** Multi-scale signal feature processing for automatic objective vehicle noise and vibration quality analysis. *Acoustics, Speech, And Signal Processing, 1995, ICASSP-95, 1995 International Conference on, Detroit, MI, USA 9-12 May 1995,* 09. Mai 1995, vol. 5, 2959-2962